(19) Europäisches Patentamt
European Patent Office
Office européen des brevets

(11) **EP 4 050 536 A1**

(12) **EUROPEAN PATENT APPLICATION**
published in accordance with Art. 153(4) EPC

(43) Date of publication:
**31.08.2022 Bulletin 2022/35**

(21) Application number: **20879389.3**

(22) Date of filing: **23.10.2020**

(51) International Patent Classification (IPC):
**G06Q 10/06** (2012.01)   **G06Q 50/04** (2012.01)
**G06F 16/904** (2019.01)

(52) Cooperative Patent Classification (CPC):
**G06F 16/904; G06Q 10/06; G06Q 50/04;**
Y02P 90/30

(86) International application number:
**PCT/JP2020/039819**

(87) International publication number:
**WO 2021/079966 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.10.2019 JP 2019193810**

(71) Applicant: **NEC Corporation**
**108-8001 Tokyo (JP)**

(72) Inventors:
• **SEO, Ryutaro**
**Tokyo 108-8001 (JP)**
• **OHISHI, Kazuto**
**Tokyo 108-8001 (JP)**
• **KOMIYAMA, Yuki**
**Tokyo 108-8001 (JP)**

(74) Representative: **Vossius & Partner**
**Patentanwälte Rechtsanwälte mbB**
**Siebertstraße 3**
**81675 München (DE)**

(54) **ANALYSIS DEVICE, CONTROL METHOD, AND PROGRAM**

(57) An analysis apparatus (2000) acquires relationship information (50) indicating a degree of influence of each of a plurality of explanatory variables on an objective variable. The analysis apparatus (2000) generates, by using the relationship information (50), a cause-and-effect diagram (10) representing a relationship between the objective variable and the explanatory variables. The analysis apparatus (2000) determines a display aspect for a factor display (16) or presence or absence of the display in the cause-and-effect diagram (10), based on the degree of influence of the explanatory variable.

FIG. 1

# Description

[Technical Field]

The present invention relates to an analysis of data.

[Background Art]

A technique for recognizing a relationship between a plurality of pieces of data is developed. For example, Patent Document 1 discloses a technique for representing relevance between pieces of data by using a cause-and-effect diagram, a pie graph, and the like. Herein, the cause-and-effect diagram is for visually displaying an effect (result) and a factor thereof, with a trunk extending from the effect and the grouped factors being indicated on branches extending from the trunk.

[Related Document]

[Patent Document]

[Patent Document 1] Japanese Patent Application Publication No. 2019-36061
[Patent Document 2] U.S. Patent Application Publication No. 2014/0222741A1 Specification

[Disclosure of the Invention]

[Technical Problem]

Magnitude of influence that a factor gives on an effect may be different for each factor. However, a cause-and-effect diagram in Patent Document 1 does not represent such magnitude of influence of each factor.

The present invention has been made in view of the above-described problem, and provides a technique capable of easily recognizing both an effect and a factor thereof and influence that each factor gives on the effect.

[Solution to Problem]

An analysis apparatus according to the present invention includes: 1) an acquisition unit that acquires relationship information indicating a degree of influence of each of a plurality of explanatory variables on an objective variable; and 2) a generation unit that generates, by using the relationship information, a cause-and-effect diagram representing a relationship between the objective variable and the explanatory variables.

The generation unit determines a display aspect for a display relating to each explanatory variable or presence or absence of the display in the cause-and-effect diagram, based on the degree of influence of the explanatory variable.

A control method according to the present invention is executed by a computer. The control method includes: 1) an acquisition step of acquiring relationship information indicating a degree of influence of each of a plurality of explanatory variables on an objective variable; and 2) a generation step of generating, by using the relationship information, a cause-and-effect diagram representing a relationship between the objective variable and the explanatory variables.

In the generation step, a display aspect for a display relating to each explanatory variable or presence or absence of the display in the cause-and-effect diagram is determined based on the degree of influence of the explanatory variable.

A program according to the present invention causes a computer to execute the control method according to the present invention.

[Advantageous Effects of Invention]

A technique capable of easily recognizing both an effect and a factor thereof and influence that each factor gives on the effect is provided.

[Brief Description of the Drawings]

[Fig. 1] Fig. 1 is a diagram for describing an overview of an analysis apparatus according to an example embodiment.
[Fig. 2] Fig. 2 is a diagram illustrating a function configuration of an analysis apparatus according to the example embodiment 1.
[Fig. 3] Fig. 3 is a diagram illustrating a computer for achieving the analysis apparatus.
[Fig. 4] Fig. 4 is a diagram illustrating a usage environment of the analysis apparatus.
[Fig. 5] Fig. 5 is a flowchart illustrating a flow of processing executed by the analysis apparatus according to the example embodiment 1.
[Fig. 6] Fig. 6 is a diagram illustrating a configuration of relationship information.
[Fig. 7] Fig. 7 is a diagram illustrating relationship information 50 when a relationship between an objective variable and an explanatory variable is represented by a plurality of linear models.
[Fig. 8] Fig. 8 is a diagram illustrating a cause-and-effect diagram 10 in which a display aspect for a factor display is determined by using a degree of influence of an explanatory variable.
[Fig. 9] Fig. 9 is a diagram illustrating the cause-and-effect diagram 10 in which presence or absence of a factor display is determined by using a degree of influence of an explanatory variable.
[Fig. 10] Fig. 10 is a diagram for describing an overview of an analysis apparatus according to an example embodiment 2.

[Fig. 11] Fig. 11 is a flowchart illustrating a flow of processing executed by the analysis apparatus according to the example embodiment 2.

[Fig. 12] Fig. 12 is a diagram illustrating a screen including both a cause-and-effect diagram and a graph.

[Fig. 13] Fig. 13 is a diagram illustrating a graph indicating data on a specified explanatory variable and an objective variable.

[Fig. 14] Fig. 14 is a diagram illustrating a graph when a plurality of factor displays are specified.

[Description of Embodiments]

Hereinafter, example embodiments of the present invention will be described by using the drawings. Note that, a similar component is assigned with a similar reference sign throughout all the drawings, and description therefor will be omitted as appropriate. Further, in each block diagram, each block represents not a configuration on a hardware basis but a configuration on a function basis, except as particularly described.

[Example Embodiment 1]

<Overview>

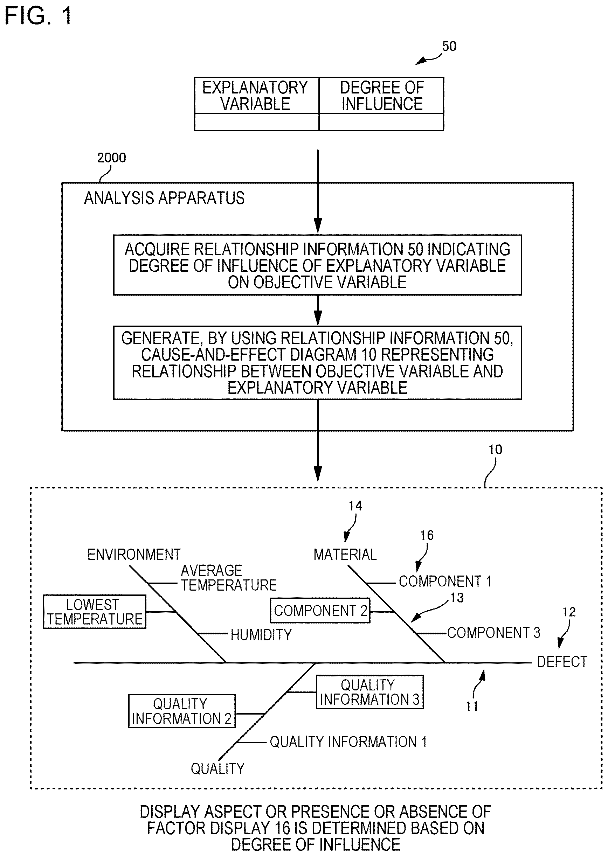

Fig. 1 is a diagram for describing an overview of an analysis apparatus 2000 according to the present example embodiment. Note that, Fig. 1 is illustrative for ease of understanding the analysis apparatus 2000, and a function of the analysis apparatus 2000 is not limited to the illustration in Fig. 1.

The analysis apparatus 2000 generates a cause-and-effect diagram 10 representing a relationship between an objective variable and a plurality of explanatory variables. Herein, a cause-and-effect diagram is a diagram visually representing a relationship between an effect and a plurality of factors thereof. In the cause-and-effect diagram 10, an effect is associated with the objective variable with the objective variable, and a factor is associated with the explanatory variable. Herein, the effect may be the objective variable itself, or may be an item relevant to the objective variable. The item relevant to the objective variable is, for example, an item focusing on an object or an event common with the objective variable. For example, there is a case in which the objective variable represents "presence or absence of a defect in a product" and the effect represents "a defect in a product", and the like. Similarly, the factor may be the explanatory variable itself, or may be an item relevant to the explanatory variable.

The cause-and-effect diagram 10 includes one trunk 11 being linked with a display (an effect display 12) representing the effect, and the trunk 11 is linked with one or more branches 13. Each branch 13 is linked with a display (a group display 14) representing a group of the factor. Further, one or more subbranches 15 are linked with one branch 13. Then, a display (a factor display 16) representing one factor is linked with each subbranch 15.

In an example in Fig. 1, the objective variable is "presence or absence of a defect in a product", and the effect is "a defect in a product". Herein, the effect display 12 indicates a "defect". Further, groups of the explanatory variables are a material, an environment, and quality. Herein, the cause-and-effect diagram 10 indicates a "material", an "environment", and "quality" as the group displays 14. Further, the explanatory variables are an average temperature, a component 1, quality information 1, or the like. Herein, the cause-and-effect diagram 10 indicates the factor display 16 associated with each of the explanatory variables.

The analysis apparatus 2000 determines a display aspect for each factor display 16 or presence or absence of a display of each factor display 16, based on a degree of influence (hereinafter, a degree of influence) that an explanatory variable associated with the factor display 16 gives on an objective variable. To do so, the analysis apparatus 2000 acquires relationship information 50 representing a relationship between the objective variable and the explanatory variable. The relationship information 50 indicates a degree of influence of each explanatory variable.

For example, the analysis apparatus 2000 makes a display aspect different between the factor display 16 of an explanatory variable having a relatively high degree of influence and the factor display 16 of an explanatory variable having a relatively low degree of influence. More specifically, the factor display 16 of an explanatory variable having a relatively high degree of influence is more emphasized. In an example in Fig. 1, the factor display 16 of an explanatory variable having a relatively high degree of influence is framed, and the factor display 16 other than the above is not framed. Besides the above, for example, the analysis apparatus 2000 allows the cause-and-effect diagram 10 in such a way as to include only the factor display 16 of an explanatory variable having a relatively high degree of influence, and does not allow the cause-and-effect diagram 10 in such a way as to include the factor display 16 of an explanatory variable other than the above.

<One Example of Advantageous Effect>

As one method of visually representing a relationship between an objective variable and an explanatory variable, a method of using a cause-and-effect diagram is conceivable. However, in an existing cause-and-effect diagram, magnitude of influence that each explanatory variable has on an objective variable cannot be recognized.

In view of the above, the analysis apparatus 2000 determines a display aspect for the factor display 16, based on a degree of influence. By doing so, difference in a degree of influence of each explanatory variable on an objective variable can be easily recognized in a cause-and-effect diagram visually representing a relationship between an objective variable and an explanatory variable. In other words, by browsing the cause-and-effect diagram 10, both a relationship between an objective variable and an explanatory variable (a relationship between an effect and a factor) and a degree of influence of the explanatory variable can be easily recognized.

Hereinafter, the present example embodiment will be described in further detail.

<Example of Function Configuration>

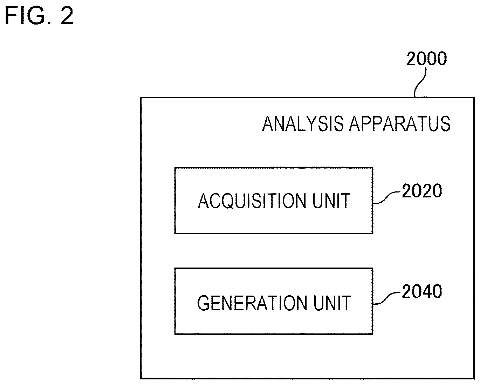

Fig. 2 is a diagram illustrating a function configuration of the analysis apparatus 2000 according to the example embodiment 1. The analysis apparatus 2000 includes an acquisition unit 2020 and a generation unit 2040. The acquisition unit 2020 acquires the relationship information 5050 for source data 40. The generation unit 2040 generates the cause-and-effect diagram 10 by using the relationship information 5050. Herein, the generation unit 2040 determines a display aspect for each factor display 16 or presence or absence of a display of the factor display 16 in the cause-and-effect diagram 10, based on a degree of influence of an explanatory variable associated with the factor display 16.

<Example of Hardware Configuration of Analysis Apparatus 2000>

Each of function configuration units of the analysis apparatus 2000 may be achieved by hardware (example: a hard-wired electronic circuit, or the like) achieving each of the function configuration units, or may be achieved by a combination of hardware and software (example: a combination of an electronic circuit and a program controlling the electronic circuit, or the like). Hereinafter, a case will be further described in which each of the function configuration units of the analysis apparatus 2000 is achieved by a combination of hardware and software.

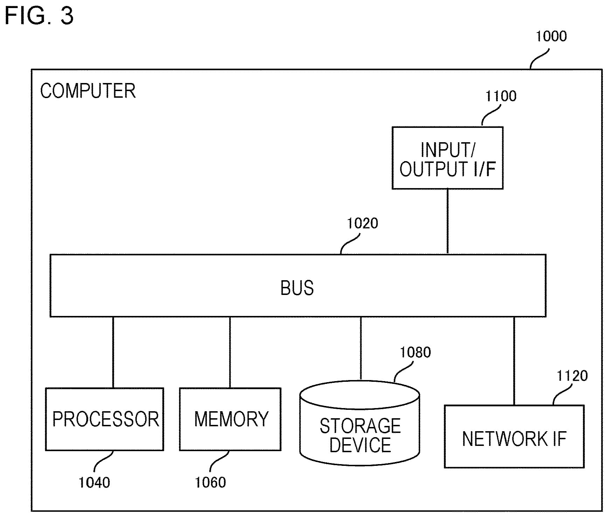

Fig. 3 is a diagram illustrating a computer 1000 for achieving the analysis apparatus 2000. The computer 1000 is any computer. For example, the computer 1000 is a stationary computer such as a personal computer (PC) or a server machine. Besides the above, for example, the computer 1000 is a portable computer such as a smartphone or a tablet terminal.

The computer 1000 may be a dedicated computer designed for achieving the analysis apparatus 2000, or may be a general-purpose computer. In a latter case, for example, each of functions of the analysis apparatus 2000 is achieved with the computer 1000 by installing a predetermined application on the computer 1000. The above-described application is configured by a program for achieving the function configuration units of the analysis apparatus 2000.

The computer 1000 includes a bus 1020, a processor 1040, a memory 1060, a storage device 1080, an input/output interface 1100, and a network interface 1120. The bus 1020 is a data transmission path through which the processor 1040, the memory 1060, the storage device 1080, the input/output interface 1100, and the network interface 1120 transmit and receive data to and from one another. However, a method of connecting the processor 1040 and the like with one another is not limited to bus connection.

The processor 1040 is various processors such as a central processing unit (CPU), a graphics processing unit (GPU), and a field-programmable gate array (FPGA). The memory 1060 is a main storage apparatus achieved by using a random access memory (RAM) or the like. The storage device 1080 is an auxiliary storage apparatus achieved by using a hard disk, a solid state drive (SSD), a memory card, a read only memory (ROM), or the like.

The input/output interface 1100 is an interface for connecting the computer 1000 to an input/output device. For example, an input apparatus such as a keyboard or an output apparatus such as a display apparatus is connected to the input/output interface 1100.

The network interface 1120 is an interface for connecting the computer 1000 to a communication network. The communication network is, for example, a local area network (LAN) or a wide area network (WAN).

The storage device 1080 stores a program (the program achieving the application described above) for achieving the function configuration units of the analysis apparatus 2000. The processor 1040 achieves the function configuration units of the analysis apparatus 2000 by reading the program into the memory 1060 and executing the program.

<Example of Usage Environment of Analysis Apparatus 2000>

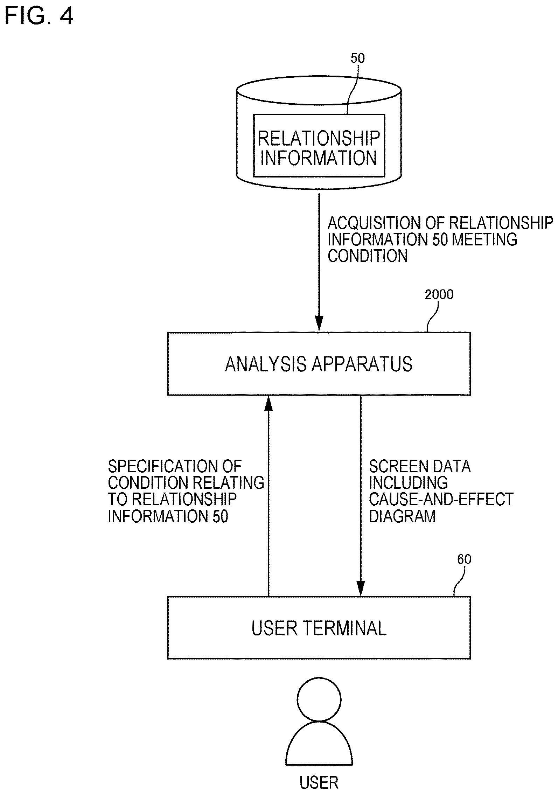

One example of a usage environment of the analysis apparatus 2000 will be described for easy understanding of the analysis apparatus 2000. Fig. 4 is a diagram illustrating a usage environment of the analysis apparatus 2000.

In Fig. 4, the analysis apparatus 2000 is connected to a user terminal 60 via a network. A user operates the user terminal 60 to transmit, to the analysis apparatus 2000, a request indicating a condition relating to specific relationship information 50 in such a way that the cause-and-effect diagram 10 for the relationship information 50 is provided. In response to the request, the analysis apparatus 2000 acquires the relationship information 50 meeting the condition from a storage apparatus, and generates the cause-and-effect diagram 10 by using the acquired relationship information 50. Then, the analysis apparatus 2000 transmits the generated cause-and-effect diagram 10 to the user terminal 60.

For example, the analysis apparatus 2000 provides, to the user terminal 60, screen data (for example, a web page) including an image of the cause-and-effect diagram 10. In this case, the user terminal 60 displays the received web page with a browser. By doing so, a user can browse the cause-and-effect diagram 10.

The usage environment of the analysis apparatus 2000 is not limited to the illustration in Fig. 4. For example, the analysis apparatus 2000 may be operated directly by a user, rather than used via the user terminal 60. Further, a method of determining the relationship information 50 for which the cause-and-effect diagram 10 is generated is not limited to a method of specifying, by a user, a condition relating to the relationship information 50 (described later in detail).

<Flow of Processing>

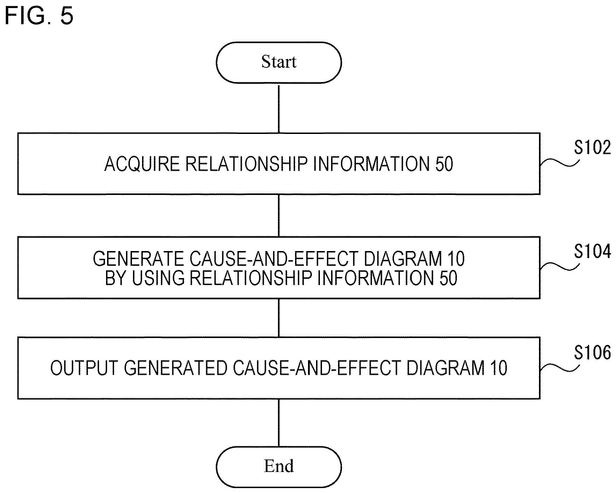

Fig. 5 is a flowchart illustrating a flow of processing executed by the analysis apparatus 2000 according to the example embodiment 1. The acquisition unit 2020 acquires the relationship information 50 (S102). The generation unit 2040 generates the cause-and-effect diagram 10 by using the relationship information 50 (SI04). The generation unit 2040 outputs the cause-and-effect diagram 10 (S106).

<Regarding Relationship Information 50>

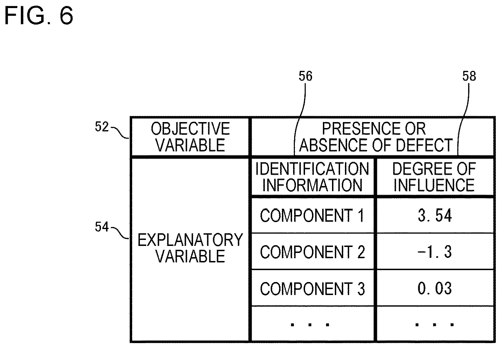

The relationship information 50 indicates a relationship between an objective variable and a plurality of explanatory variables. Fig. 6 is a diagram illustrating a configuration of the relationship information 50. In Fig. 6, the relationship information 50 includes information such as an objective variable 52 and an explanatory variable 54. The objective variable 52 indicates identification information (a name and the like) of an objective variable. The explanatory variable 54 indicates identification information 56 (a name and the like) and a degree of influence 58 for each explanatory variable.

A relationship indicated by the relationship information 50 is a relationship estimated, for example, by analyzing data (hereinafter, source data) in which a value of an objective variable is associated with a value of each explanatory variable. The estimated relationship is represented by, for example, a linear model (a linear regression model or a linear identification model) for estimating a value of an objective variable from a value of each explanatory variable. In this case, the relationship information 50 can be regarded also as information representing a linear model.

For example, a degree of influence of an explanatory variable is represented by a coefficient associated with the explanatory variable (a coefficient by which a value of the explanatory variable is multiplied) in a linear model. This is because an explanatory variable having a larger associated coefficient in a linear model gives more influence on a value of an objective variable acquired by using the model. In view of this, for example, the relationship information 50 indicates a coefficient associated with an explanatory variable in a learned linear model, as a degree of influence of the explanatory variable.

For example, it is assumed that presence or absence of a defect in a product is handled as an objective variable and each index (for example, a component of a material, and an environment such as a temperature) representing a manufacturing condition for a product is handled as an explanatory variable. In this case, source data indicate a value (a content of each component, a temperature, and the like) of each index representing a manufacturing condition, and presence or absence of a defect in a product manufactured under the manufacturing condition. When a linear model is learned by using the source data, a learned linear model representing a relationship between presence or absence of a defect and a manufacturing condition can be acquired.

For example, the analysis apparatus 2000 handles information representing the linear model as the relationship information 50. In this case, the relationship information 50 indicates, in the objective variable 52, identification information of an objective variable in the generated linear model, indicates, in the identification information 56, identification information of each explanatory variable in the generated linear model, and indicates, in the degree of influence 58, a coefficient associated with each explanatory variable.

A relationship between an objective variable and an explanatory variable may be represented by a plurality of linear models. Examples of a method of representing a relationship between an objective variable and an explanatory variable by a plurality of linear models include a method of generating an estimation model by using heterogeneous mixture learning (see Patent Document 2). The heterogeneous mixture learning generates an estimation model being defined by a set of a tree configured by a node representing a conditional branch and a plurality of linear models. One linear model is allocated to each leaf of the tree. Upon use of the estimation model, first, the tree is traced from a root to a leaf by using data (a combination of values of each explanatory variable) to be estimated. Then, the data to be estimated are input to a linear model associated with the reached leaf, and thereby a value of an objective variable is acquired.

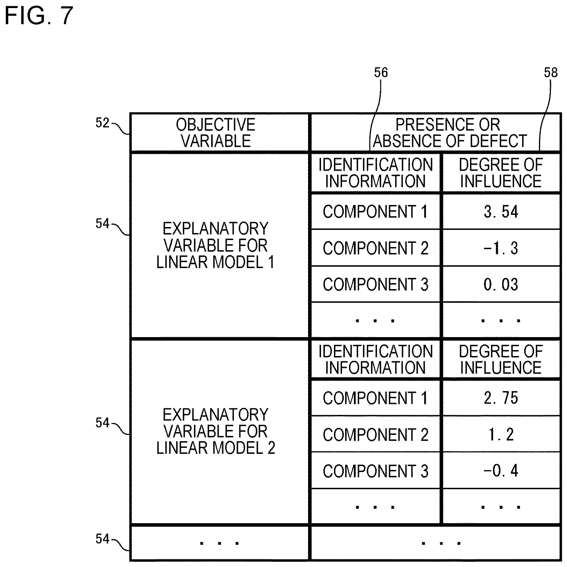

When a relationship between an objective variable and an explanatory variable is represented by a plurality of linear models, for example, the relationship information 50 indicates the explanatory variable 54 (a combination of the identification information 56 and the degree of influence 58) for each of the plurality of linear models. Fig. 7 is a diagram illustrating the relationship information 50 when a relationship between an objective variable and an explanatory variable is represented by a plurality of linear models. The relationship information 50 in Fig. 7 indicates the explanatory variable 54 for each of the plurality of linear models.

<Acquisition of Relationship Information 50: S102>

The acquisition unit 2020 acquires the relationship information 50 for use in generation of the cause-and-effect diagram 10 (S102). For example, the acquisition unit 2020 acquires, from among a plurality of pieces of relationship information 50 stored in advance in a storage apparatus, the relationship information 50 meeting a condition specified by a user.

For example, the relationship information 50 is determined by a condition relating to a source used for a relationship between an objective variable and an explanatory variable indicated by the relationship information 50. For example, when source data are data relating to manufacture of a product, the source data can be determined by conditions such as a name of the product, a location of manufacture, and a date and time of manufacture.

In view of the above, a user gives, to the analysis apparatus 2000, a condition relating to source data from which the cause-and-effect diagram 10 is desired to be generated. The analysis apparatus 2000 searches the above-described storage apparatus under the given condition, and thereby acquires the relationship information 50 meeting the condition.

Note that, when there are a plurality of pieces of relationship information 50 meeting a condition specified by a user, the analysis apparatus 2000 may generate the cause-and-effect diagram 10 for each of all the pieces of relationship information 50, or may generate the cause-and-effect diagram 10 for only some pieces of relationship information 50. In a latter case, the acquisition unit 2020 may provide, to a user, information relating to pieces of relationship information 50 meeting a specified condition and allow the user to select one or more pieces of relationship information 50. In this case, the analysis apparatus 2000 generates the cause-and-effect diagram 10 for only the relationship information 50 selected by the user.

Besides the above, for example, the acquisition unit 2020 may receive the relationship information 50 transmitted from another apparatus (for example, the user terminal 60). For example, in this case, the user terminal 60 transmits the relationship information 50 to the analysis apparatus 2000.

Besides the above, for example, the acquisition unit 2020 may acquire information necessary for generation of the relationship information 50 and generate the relationship information 50 by using the acquired information. For example, a user provides, to the acquisition unit 2020, information indicating source data, identification information of an objective variable, a type of a model, and the like. The acquisition unit 2020 generates an estimation model by using the provided information, and generates the relationship information 50 represented by the generated estimation model.

Note that, processing of generating the relationship information 50 by using information provided from a user may be performed by an apparatus other than the analysis apparatus 2000. In this case, the acquisition unit 2020 acquires the relationship information 50 from an apparatus generating the relationship information 50.

<Generation of Cause-and-effect Diagram 10>

The generation unit 2040 generates the cause-and-effect diagram 10 by using the relationship information 50. Herein, for generation of the cause-and-effect diagram 10, information (hereinafter, group definition information) for defining a group of explanatory variables is necessary in addition to identification information of an objective variable and an explanatory variable. The group definition information indicates, for example, identification information (a name or the like) of a group and identification information of each explanatory variable included in the group. The group definition information may be included in the relationship information 50, or may be prepared separately from the relationship information 50. Note that, when an effect is not an objective variable itself (for example, when an objective variable is "presence or absence of a defect", whereas an effect is a "defect"), identification information (a name or the like) of the effect is also prepared as well as identification information of a group. The same applies when a factor is not an explanatory variable itself.

For example, the generation unit 2040 generates the effect display 12, the group display 14, and the factor display 16 by using identification information of an objective variable, identification information of a group indicated by group definition information, and identification information of an explanatory variable, respectively. Further, the generation unit 2040 determines a positional relationship between the group display 14 and the factor display 16 by using the group definition information. Then, the generation unit 2040 generates the cause-and-effect diagram 10 by connecting each of the generated displays with the trunk 11, the branch 13, and the subbranch 14, based on the determined positional relationship.

However, the generation unit 2040 generates the factor display 16, based on a degree of influence of an explanatory variable indicated by the relationship information 50. Hereinafter, a method of generating the factor display 16, based on a degree of influence, will be specifically exemplified.

«Case in which Display Aspect is Determined According to Degree of Influence»

For example, the generation unit 2040 determines a display aspect for the factor display 16 of an explanatory variable by comparing a degree of influence of the explanatory variable with a predetermined threshold value. For example, the generation unit 2040 makes a display aspect for the factor display 16 of an explanatory variable having a degree of influence equal to or more than a threshold value different from a display aspect for the factor display 16 of an explanatory variable having a degree of influence less than a threshold value. Examples of a method of making a display aspect for the factor display 16 different include a method of making a background (presence or absence of filling, a color, a pattern, and the like) of the factor display 16 different, a method of making a frame of the factor display 16 different (presence or absence of a frame, a color, a shape, a thickness, and the like), and a method of making a size of the factor display 16 different.

Information determining a display aspect for each of a case in which a degree of influence is equal to or more than a threshold value and a case in which a degree of influence is less than a threshold value is stored in advance in a storage apparatus accessible from the generation unit 2040. However, the information may be modifiable by a user.

Herein, it is preferred that the higher a degree of influence of an explanatory variable, the more highlighted (emphasized) the factor display 16 of the explanatory variable. In view of this, for example, it is preferred that a display aspect for the factor display 16 is determined by a criterion such as "a background of the factor display 16 of an explanatory variable having a degree of influence equal to or more than a threshold value is highlighted more than a background of the factor display 16 other than the above", "a frame of the factor display 16 of an explanatory variable having a degree of influence equal to or more than a threshold value is highlighted more than a frame of the factor display 16 other than the above", or "a size of the factor display 16 of an explanatory variable having a degree of influence equal to or more than a threshold value is made larger than a frame of the factor display 16 other than the above".

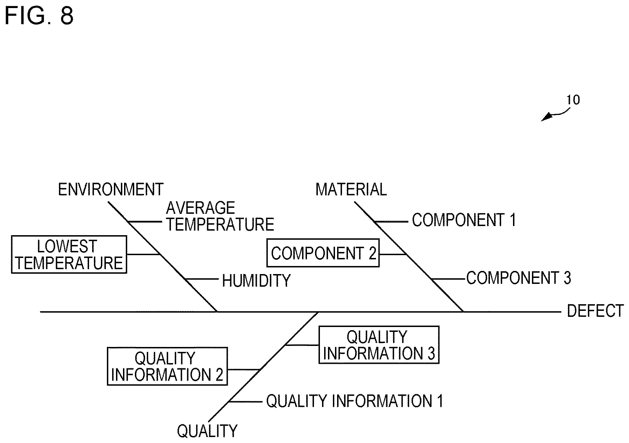

Fig. 8 is a diagram illustrating the cause-and-effect diagram 10 in which a display aspect for the factor display 16 is determined by using a degree of influence of an explanatory variable. In Fig. 8, only the factor display 16 of explanatory variables (a lowest temperature, a component 2, quality information 2, and quality information 3) having a degree of influence equal to or more than a threshold value is framed. Thus, an explanatory variable having a degree of influence equal to or more than a threshold value can be easily discriminated from an explanatory variable other than the above.

There may be a plurality of threshold values for a degree of influence. In other words, a plurality of numerical ranges may be determined for a degree of influence, and a display aspect for the factor display 16 may be made different for each numerical range. For example, three numerical ranges R1 to R3, each being "less than Th1", "equal to or more than Th1 and less than Th2", and "equal to or more than Th2", are provided (where Th1 and Th2 are real numbers satisfying Th1<Th2). In this case, the generation unit 2040 makes a display aspect for the factor display 16 of an explanatory variable having a degree of influence belonging to the numerical range R1, a display aspect for the factor display 16 of an explanatory variable having a degree of influence belonging to the numerical range R2, and a display aspect for the factor display 16 of an explanatory variable having a degree of influence belonging to the numerical range R3 different from one another. For example, when the higher a degree of influence, the more emphasized the factor display 16, a degree of highlight is high in order of a display aspect for the factor display 16 of an explanatory variable having a degree of influence belonging to the numerical range R3, a display aspect for the factor display 16 of an explanatory variable having a degree of influence belonging to the numerical range R2, and a display aspect for the factor display 16 of an explanatory variable having a degree of influence belonging to the numerical range R1.

Information determining association between a numerical range and a display aspect is stored in advance in a storage apparatus accessible from the generation unit 2040. However, the information may be modifiable by a user.

The generation unit 2040 may determine a display aspect for the factor display 16, based on a rank in order of a degree of influence. For example, the generation unit 2040 determines each explanatory variable that falls within a predetermined rank in descending order of a degree of influence from among all explanatory variables, and makes a display aspect for the factor display 16 of the explanatory variable different from a display aspect for the factor display 16 of other explanatory variables. For example, when a predetermined rank in order is 3, a display aspect for the factor display 16 of each of explanatory variables having largest to third largest degrees of influence is made different from the factor display 16 other than the above.

The generation unit 2040 may perform ranking of a degree of influence in a group unit of explanatory variables. In other words, the generation unit 2040 determines, for each group, each explanatory variable that falls within a predetermined rank in descending order of a degree of influence in the group, and makes a display aspect for the factor display 16 of the determined explanatory variable different from a display aspect for the factor display 16 of other explanatory variables. For example, when a predetermined rank in order is 2, the generation unit 2040 determines, for each group, an explanatory variable having the largest degree of influence and an explanatory variable having a next largest degree of influence in the group. Then, the generation unit 2040 makes a display aspect for the factor display 16 of the determined explanatory variables different from a display aspect for the factor display 16 of other explanatory variables.

Note that, a degree of influence may be a minus value like a degree of influence of the component 2 in the relationship information 50 in Fig. 6. When a degree of influence can take a minus value like this, the generation unit 2040 may use an absolute value of a degree of influence, rather than a value itself of a degree of influence. For example, the generation unit 2040 emphasizes the factor display 16 of an explanatory variable having an absolute value of a degree of influence equal to or more than a threshold value. Besides the above, for example, the generation unit 2040 ranks an explanatory variable by using an absolute value of a degree of influence, and determines a display aspect for the factor display 16, based on the rank in order. The same applies to a case in which presence or absence of the factor display 16 is determined according to a degree of influence.

Further, the generation unit 2040 may reflect, on a display aspect for the factor display 16, a sign of an associated explanatory variable. For example, the generation unit 2040 adds an upward arrow to the factor display 16 when a sign of a value of an associated explanatory variable is positive, and adds a downward arrow to the factor display 16 when a sign of a value of an associated explanatory variable is negative. Besides the above, for example, the generation unit 2040 may use, for the factor display 16, different colors, shapes, and the like between when a sign of a value of an associated explanatory variable is positive and when a sign of a value of an associated explanatory variable is negative.

«Case in which Presence or Absence of Factor Display 16 is Determined According to Degree of Influence»

For example, the generation unit 2040 determines whether to allow the cause-and-effect diagram 10 to include the factor display 16 of an explanatory variable by comparing a degree of influence of the explanatory variable with a threshold value. More specifically, the generation unit 2040 allows the cause-and-effect diagram 10 in such a way as to include the factor display 16 of an explanatory variable having a degree of influence equal to or more than a threshold value, and does not allow the cause-and-effect diagram 10 in such a way as to include the factor display 16 of an explanatory variable having a degree of influence less than a threshold value.

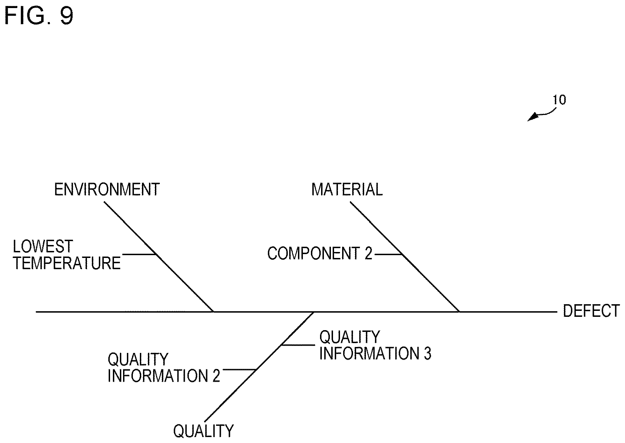

Fig. 9 is a diagram illustrating the cause-and-effect diagram 10 in which presence or absence of the factor display 16 is determined by using a degree of influence of an explanatory variable. In Fig. 9, explanatory variables having a degree of influence equal to or more than a threshold value are same as an example in Fig. 8. However, in Fig. 9, only the factor display 16 of the explanatory variables having a degree of influence equal to or more than a threshold value is included in the cause-and-effect diagram 10.

Besides the above, for example, the generation unit 2040 may determine presence or absence of the factor display 16 according to a rank in order of a degree of influence. For example, the generation unit 2040 determines each explanatory variable that falls within a predetermined rank in descending order of a degree of influence from among all explanatory variables, and allows the cause-and-effect diagram 10 to include only the factor display 16 of the determined explanatory variable. Besides the above, for example, the generation unit 2040 determines, for each group, each explanatory variable that falls within a predetermined rank in descending order of a degree of influence in the group, and allows the cause-and-effect diagram 10 to include only the factor display 16 of the determined explanatory variable.

Herein, when presence or absence of the factor display 16 is determined by the above-described method, there may be the group display 14 including no factor display 16. In view of this, the generation unit 2040 may determine a display aspect for the group display 14 according to whether the factor display 16 is included. By doing so, the group display 14 including the factor display 16 is more emphasized than the group display 14 including no factor display 16. An example of a method of making a display aspect for the group display 14 different includes a method of making a background, a frame, and the like different, similarly to a method of making a display aspect for the factor display 16 different. Further, the generation unit 2040 may not display the group display 14 including no factor display 16. In other words, the generation unit 2040 determines presence or absence of a display of the group display 14 only the group display 14 including at least one factor display 16.

«Case in which Relationship Information 50 Includes Information on Plurality of Linear Model s»

As illustrated by using Fig. 7, the relationship information 50 may indicate information on each of a plurality of linear models. In this case, the generation unit 2040 may generate the cause-and-effect diagram 10 for each of a plurality of linear models, or may accept specification of a linear model from a user and generate the cause-and-effect diagram 10 for the specified linear model.

Besides the above, for example, the generation unit 2040 may compute, for each explanatory variable, a statistical value (a sum value, a mean value, a maximum value, a minimum value, or the like) of a degree of influence of the explanatory variable, and generate one cause-and-effect diagram 10 by handling the statistical value as a degree of influence of the explanatory variable. For example, when a sum value of degrees of influence indicated by the relationship information 50 is used for generation of the cause-and-effect diagram 10, the generation unit 2040 uses an equation (1) below.

[Mathematical 1]

$$E_i = \sum_{j=1}^{n} e[i][j] \qquad (1)$$

e[i][j] is a degree of influence of an explanatory variable i indicated by the relationship information 50 for a j-th linear model. n is a total number of linear models indicated by the relationship information 50. $E_i$ is a value handled as a degree of influence of the explanatory variable i when the cause-and-effect diagram 10 is generated.

<Output of Cause-and-effect Diagram 10>

The analysis apparatus 2000 outputs the cause-and-effect diagram 10 generated by the generation unit 2040. There are various specific methods of outputting the cause-and-effect diagram 10. For example, the analysis apparatus 2000 stores image data representing the cause-and-effect diagram 10 in a storage apparatus, displays the image data on a display apparatus connected to the analysis apparatus 2000, or transmits the image data to another apparatus (for example, the user terminal 60).

[Example Embodiment 2]

<Overview>

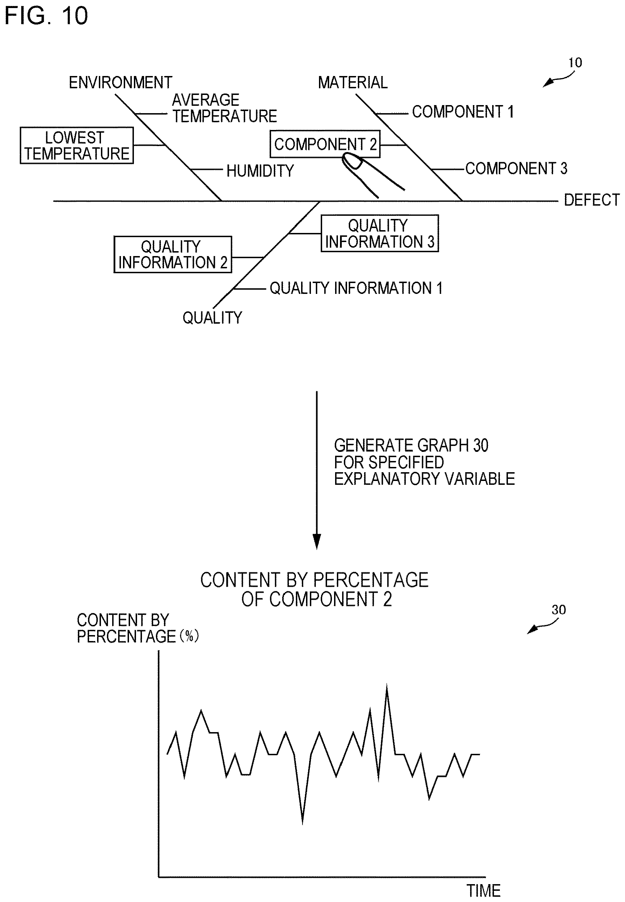

Fig. 10 is a diagram for describing an overview of an analysis apparatus 2000 according to an example embodiment 2. Fig. 10 is illustrative for ease of understanding the analysis apparatus 2000, and a function of the analysis apparatus 2000 is not limited to the illustration in Fig. 10. Further, the analysis apparatus 2000 according to the example embodiment 2 has a function similar to the analysis apparatus 2000 according to the example embodiment 1, except for the description below.

The analysis apparatus 2000 according to the example embodiment 2 outputs, in response to an input being performed of specifying a factor display 16 on an output cause-and-effect diagram 10, a graph 30 for an explanatory variable (hereinafter, also referred to as a specified explanatory variable) associated with the specified factor display 16. In Fig. 10, the factor display 16 being a "component 2" is selected by a user. In view of this, the analysis apparatus 2000 generates, as the graph 30, a line graph representing data acquired for the component 2 in time-series order.

Herein, source data used for estimating a relationship between an objective variable and an explanatory variable represented by relationship information 50 include a plurality of sets of a value of an objective variable and a value of an explanatory variable. For example, the source data indicate time-series data of a set of a value of an objective variable and a value of an explanatory variable. For example, as the source data relating to manufacture of a product, data indicating sets of presence or absence of a defect in a product and a manufacturing condition at each different point in time of manufacture can be handled.

The graph 30 is for graphically representing a plurality of values indicated by source data for a specified explanatory variable. For example, the graph 30 is a graph representing the plurality of pieces of data in time-series order, or a graph representing a result of statistically processing the plurality of pieces of data.

<Representative Advantageous Effect>

A user can easily recognize difference in a degree of influence that each explanatory variable gives on an objective variable, by browsing the cause-and-effect diagram 10 generated by the analysis apparatus 2000. For example, an explanatory variable having a high degree of influence can be easily recognized by emphasizing the factor display 16 of the explanatory variable having a high degree of influence.

Then, it can be said that there is a high probability that a user having recognized difference in a degree of influence of an explanatory variable in this way wants to browse more information relevant to each explanatory variable. For example, when the factor display 16 of an explanatory variable having a high degree of influence is emphasized, there is a high probability that a user wants to browse more detailed information on an explanatory variable having a high degree of influence.

In this regard, the analysis apparatus 2000 according to the present example embodiment generates, when an input of specifying the factor display 16 is performed on the cause-and-effect diagram 10, the graph 30 for the specified explanatory variable. Thus, a user can easily acquire more detailed information on the specified explanatory variable.

Hereinafter, the analysis apparatus 2000 according to the present example embodiment will be described in further detail.

<Example of Function Configuration>

A function configuration of the analysis apparatus 2000 according to the example embodiment 2 is, for example, represented by Fig. 2, similarly to the analysis apparatus 2000 according to the example embodiment 1. However, a generation unit 2040 according to the example embodiment 2 generates and outputs, in response to an input being performed of specifying the factor display 16 on the cause-and-effect diagram 10, the graph 30 for a factor associated with the specified factor display 16.

<Example of Hardware Configuration>

A hardware configuration of the analysis apparatus 2000 according to the example embodiment 2 is, for example, represented by Fig. 3, similarly to the analysis apparatus 2000 according to the example embodiment 1. However, a storage device 1080 according to the example embodiment 2 stores a program for achieving a function of the analysis apparatus 2000 according to the example embodiment 2.

<Flow of Processing>

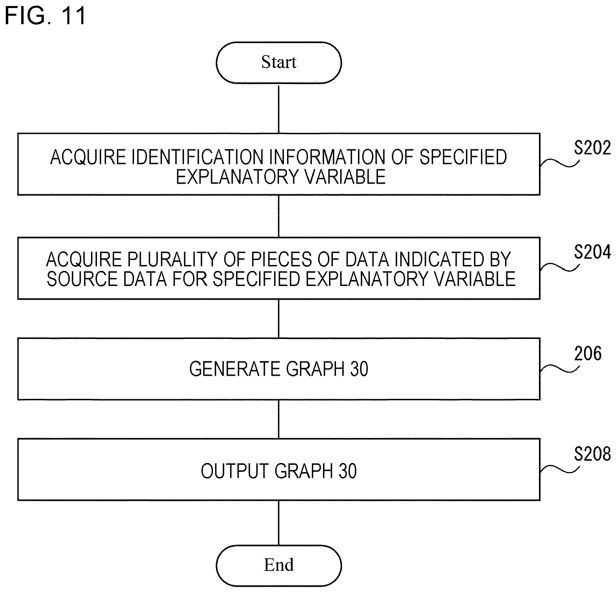

Fig. 11 is a flowchart illustrating a flow of processing executed by the analysis apparatus 2000 according to the example embodiment 2. An acquisition unit 2020 acquires identification information of a specified explanatory variable (S202). The generation unit 2040 acquires, for the specified explanatory variable, a plurality of pieces of data indicated by source data (S204). The generation unit 2040 generates the graph 30 by using the acquired plurality of pieces of data (S206). The generation unit 2040 outputs the generated graph 30 (S208).

<Acquisition of Identification Information of Factor Display 16: S202>

The acquisition unit 2020 acquires identification information of a specified explanatory variable in the cause-and-effect diagram 10 (S202). Herein, when a particular part is specified in a diagram output by a method of being displayed or the like on a display apparatus, various types of existing techniques can be used for a technique for acquiring identification information of the specified part.

<Acquisition of Source Data: S204>

The generation unit 2040 acquires, for a specified explanatory variable, a plurality of pieces of data indicated by source data. The source data are stored in advance in a storage apparatus accessible from the generation unit 2040. The generation unit 2040 acquires a plurality of pieces of data for a specified explanatory variable by accessing the storage apparatus.

For example, as described above, the source data indicate time-series data including a set of a value of an objective variable and a value of an explanatory variable. In this case, the generation unit 2040 acquires time-series data representing a temporal change of a value of a specified explanatory variable. However, the source data only need to include a plurality of sets of a value of an objective variable and a value of an explanatory variable, and the sets may not be data representing a temporal change.

<Generation of Graph 30: S206>

The generation unit 2040 generates the graph 30 by using a plurality of pieces of data acquired for a specified explanatory variable (S206). The graph 30 can be any type that can be generated by using a plurality of pieces of data. When acquired data are time-series data as described above, for example, the graph 30 is a line graph or the like representing a temporal change of a value of a specified explanatory variable. Besides the above, for example, the graph 30 is a histogram or the like representing a result of statistically processing a plurality of values of an explanatory variable.

Herein, the generation unit 2040 may generate a plurality of graphs 30 for a specified explanatory variable. For example, the generation unit 2040 generates a graph representing a time-series change of acquired data and a graph representing a result of statistically processing the data. Besides the above, for example, the generation unit 2040 statistically processes acquired data by using each of a plurality of methods, and generates the graph 30 for each of results.

Herein, what type of graph generated as the graph 30 may be fixedly determined in advance, or may be specifiable by a user.

<Output of Graph 30>

The generation unit 2040 outputs the generated graph 30. A method of outputting the graph 30 is similar to a method of outputting the cause-and-effect diagram 10. Further, the generation unit 2040 may output the cause-and-effect diagram 10 together with the graph 30. For example, the generation unit 2040 generates and outputs screen data (for example, a web page) including both the cause-and-effect diagram 10 and the graph 30.

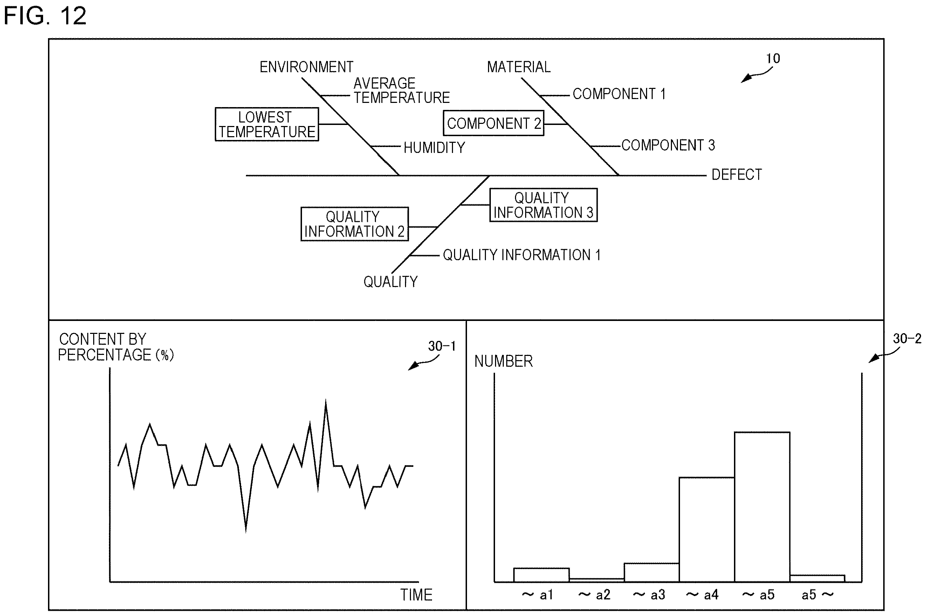

Fig. 12 is a diagram illustrating a screen including both the cause-and-effect diagram 10 and the graph 30. Note that, in Fig. 12, two graphs being a graph (30-1) representing data in time-series order and a histogram (30-2) are included as the graph 30.

The graph 30 is not limited to a line graph or a histogram. For example, a box plot may be generated by accumulating for each particular interval, or a bar graph representing the number of samples in a similar interval may be displayed. Note that, the intervals for accumulating may be set in advance, may be selected by a user from among a plurality of types of intervals (monthly, weekly, daily, and hourly) prepared in advance, or any value may be specified by a user.

Further, an entire period included in the graph 30 (a period of time from when to when data are displayed) may be from a first point in time to a last point in time included in source data, or any period may be specified by a user. In a latter case, for example, a calendar is displayed on a screen and an input of specifying both a first point in time and a last point in time can be performed on the calendar.

<Addition of Data Relating to Objective Variable>

The generation unit 2040 may acquire, from source data, data on an objective variable in addition to a specified explanatory variable, and generate the graph 30 by using the specified explanatory variable and data on the objective variable. By doing so, a relationship with the objective variable can be directly recognized regarding the specified explanatory variable.

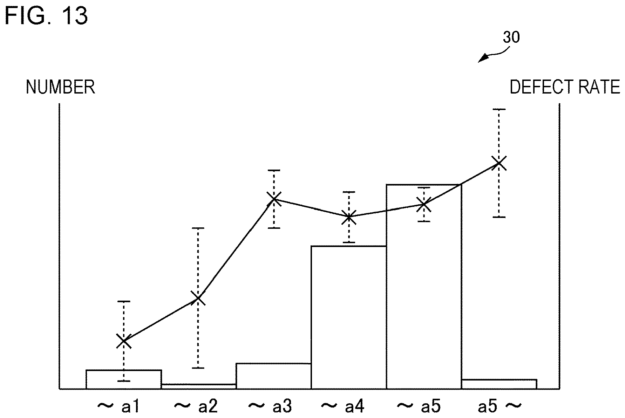

Fig. 13 is a diagram illustrating the graph 30 indicating data on a specified explanatory variable and an objective variable. In Fig. 13, the graph 30 is a graph including a histogram of values of a specified explanatory variable on which a broken line representing data on an objective variable is superimposed. More specifically, the broken line indicates, for each grade indicated on a horizontal axis of the histogram, a defect rate in products that fall under the grade (a rate of the number of defective products to the total number of manufactured products that fall under the grade). Note that, in Fig. 13, a confidence interval is displayed for a defect rate of each grade.

Further, instead of data on an objective variable or together therewith, data on an item relevant to the objective variable may be added to the graph 30. For example, examples include a case of allowing the graph 30 to include data on a defect rate when an objective variable is presence or absence of a defect, and the like.

<Specification of Plurality of Factor Displays 16>

A user may be able to specify a plurality of factor displays 16 included in the cause-and-effect diagram 10. In this case, the generation unit 2040 generates the graph 30 for each of a plurality of specified explanatory variables. At this time, the generation unit 2040 may generate the graph 30 individually for each piece of data acquired for each of the plurality of specified explanatory variables, or may generate one graph 30 for these pieces of data.

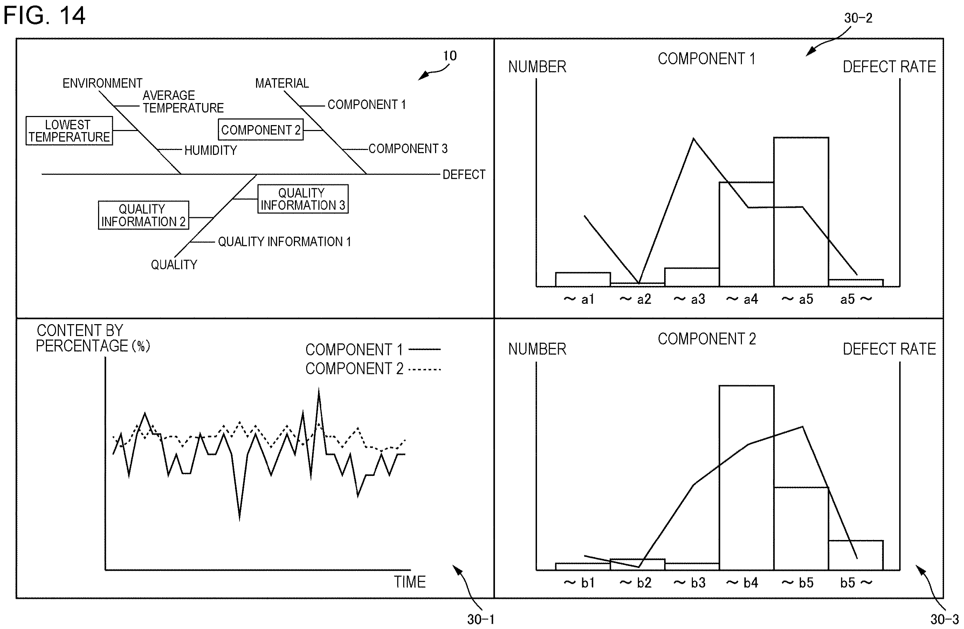

Fig. 14 is a diagram illustrating the graph 30 when a plurality of factor displays 16 are specified. In this example, two explanatory variables being a component 1 and the component 2 are specified. In view of this, a graph 30-1 indicates data on the component 1 and the component 2 in time-series order. Further, a graph 30-2 and a graph 30-3 indicate a histogram for the component 1 and a histogram for the component 2, respectively.

While the example embodiments of the present invention have been described with reference to the drawings, the above-described example embodiments are exemplification of the present invention, and a combination of the above-described example embodiments or various configurations other than the above may be employed.

A part or all of the above-described example embodiments can be described as, but not limited to, the following supplementary notes.

Hereinafter, examples of a reference form will be added.

1. An analysis apparatus including:

an acquisition unit that acquires relationship information indicating a degree of influence of each of a plurality of explanatory variables on an objective variable; and
a generation unit that generates, by using the relationship information, a cause-and-effect diagram representing a relationship between the objective variable and the explanatory variables, in which

the generation unit determines a display aspect for a display relating to each explanatory variable or presence or absence of the display in the cause-and-effect diagram, based on the degree of influence of the explanatory variable.

2. The analysis apparatus according to supplementary note 1, in which

a relationship between the objective variable and a plurality of the explanatory variables is represented by one or more linear models, and the degree of influence of the explanatory variable indicated by the relationship information is represented by a coefficient by which the explanatory variable is multiplied in the linear model.

3. The analysis apparatus according to supplementary note 1 or 2, in which

the relationship information indicates, for each of the explanatory variables, a plurality of degrees of influence of the explanatory variable, and
the generation unit computes, for each of the explanatory variables, a statistical value of the plurality of degrees of influence indicated by the relationship information for the explanatory variable, and generates the determination-and-effect diagram by handling the computed statistical value as the degree of influence of the explanatory variable.

4. The analysis apparatus according to supplementary notes 1 to 3, in which the generation unit

makes a display aspect different between a display relating to an explanatory variable having the degree of influence equal to or more than a threshold value and a display relating to an explanatory variable other than the explanatory variable having the degree of influence equal to or more than the threshold value,
makes a display aspect different between a display relating to an explanatory variable having the degree of influence within a predetermined rank in order and a display relating to an explanatory variable other than the explanatory variable having the degree of influence within the predetermined rank in order, or,
for each group of the explanatory variables, makes a display aspect different between a display relating to an explanatory variable having the degree of influence within a predetermined rank in order among explanatory variables belonging to the group and a display relating to an explanatory variable other than the explanatory variable having the degree of influence within the predetermined rank in order among the explanatory variables belonging to the group.

5. The analysis apparatus according to supplementary notes 1 to 3, in which the generation unit

allows the cause-and-effect diagram to include only a display relating to an explanatory variable having the degree of influence equal to or more than a threshold value,

allows the cause-and-effect diagram to include only a display relating to an explanatory variable having the degree of influence within a predetermined rank in order, or,

for each group of the explanatory variables, allows the cause-and-effect diagram to include only a display relating to an explanatory variable having the degree of influence within a predetermined rank in order among explanatory variables belonging to the group.

6. The analysis apparatus according to any one of supplementary notes 1 to 5, in which the generation unit

outputs the cause-and-effect diagram,

acquires, when the explanatory variable is specified in the output cause-and-effect diagram, data indicating a plurality of values of the specified explanatory variable, and

generates a graph by using the data.

7. The analysis apparatus according to supplementary note 6, in which the generation unit

acquires time-series data on the specified explanatory variable, and

generates, as the graph, a first graph representing a temporal change of a value of the explanatory variable or a second graph representing a result of statistically processing the time-series data.

8. The analysis apparatus according to supplementary note 7, in which

the generation unit generates screen data including both the first graph and the second graph.

9. The analysis apparatus according to any one of supplementary notes 6 to 8, in which the generation unit allows the graph to include data on the objective variable.

10. A control method executed by a computer, including:

an acquisition step of acquiring relationship information indicating a degree of influence of each of a plurality of explanatory variables on an objective variable; and

a generation step of generating, by using the relationship information, a cause-and-effect diagram representing a relationship between the objective variable and the explanatory variables, in which,

in the generation step, a display aspect for a display relating to each explanatory variable or presence or absence of the display in the cause-and-effect diagram is determined based on the degree of influence of the explanatory variable.

11. The control method according to supplementary note 10, in which

a relationship between the objective variable and a plurality of the explanatory variables is represented by one or more linear models, and the degree of influence of the explanatory variable indicated by the relationship information is represented by a coefficient by which the explanatory variable is multiplied in the linear model.

12. The control method according to supplementary note 10 or 11, in which

the relationship information indicates, for each of the explanatory variables, a plurality of degrees of influence of the explanatory variable, the control method further including,

in the generation step, computing, for each of the explanatory variables, a statistical value of the plurality of degrees of influence indicated by the relationship information for the explanatory variable, and generating the determination-and-effect diagram by handling the computed statistical value as the degree of influence of the explanatory variable.

13. The control method according to supplementary notes 10 to 12, further including,

in the generation step,

making a display aspect different between a display relating to an explanatory variable having the degree of influence equal to or more than a threshold value and a display relating to an explanatory variable other than the explanatory variable having the degree of influence equal to or more than the threshold value,

making a display aspect different between a display relating to an explanatory variable having the degree of influence within a predetermined rank in order and a display relating to an explanatory variable other than the explanatory variable having the degree of influence within the predetermined rank in order, or,

for each group of the explanatory variables, making a display aspect different between a display relating to an explanatory variable having the degree of influence within a predetermined rank in order among explanatory variables belonging to the group and a display relating to an explanatory variable other than the explanatory variable having the degree of influence within the predetermined rank in order among the explanatory variables belonging to the group.

14. The control method according to supplementary notes 10 to 12, further including,

in the generation step,
allowing the cause-and-effect diagram to include only a display relating to an explanatory variable having the degree of influence equal to or more than a threshold value,
allowing the cause-and-effect diagram to include only a display relating to an explanatory variable having the degree of influence within a predetermined rank in order, or,
for each group of the explanatory variables, allowing the cause-and-effect diagram to include only a display relating to an explanatory variable having the degree of influence within a predetermined rank in order among explanatory variables belonging to the group.

15. The control method according to any one of supplementary notes 10 to 14, further including:

in the generation step,
outputting the cause-and-effect diagram;
acquiring, when the explanatory variable is specified in the output cause-and-effect diagram, data indicating a plurality of values of the specified explanatory variable; and
generating a graph by using the data.

16. The control method according to supplementary note 15, further including:

in the generation step,
acquiring time-series data on the specified explanatory variable; and
generating, as the graph, a first graph representing a temporal change of a value of the explanatory variable or a second graph representing a result of statistically processing the time-series data.

17. The control method according to supplementary note 16, further including,
in the generation step, generating screen data including both the first graph and the second graph.
18. The control method according to any one of supplementary notes 15 to 17, further including,
in the generation step, allowing the graph to include data on the objective variable.
19. A program causing a computer to execute the control method according to any one of supplementary notes 10 to 18.

This application is based upon and claims the benefit of priority from Japanese patent application No. 2019-193810, filed on October 24, 2019, the disclosure of which is incorporated herein in its entirety by reference.

[Reference signs List]

| 10 | Cause-and-effect diagram |
|------|---------------------------|
| 11 | Trunk |
| 12 | Effect display |
| 13 | Branch |
| 14 | Group display |
| 15 | Subbranch |
| 16 | Factor display |
| 30 | Graph |
| 50 | Relationship information |
| 52 | Objective variable |
| 54 | Explanatory variable |
| 56 | Degree of influence |
| 60 | User terminal |
| 1000 | Computer |
| 1020 | Bus |
| 1040 | Processor |
| 1060 | Memory |
| 1080 | Storage device |
| 1100 | Input/output interface |
| 1120 | Network interface |
| 2000 | Analysis apparatus |
| 2020 | Acquisition unit |
| 2040 | Generation unit |

**Claims**

1. An analysis apparatus comprising:

an acquisition unit that acquires relationship information indicating a degree of influence of each of a plurality of explanatory variables on an objective variable; and
a generation unit that generates, by using the relationship information, a cause-and-effect diagram representing a relationship between the objective variable and the explanatory variables, wherein
the generation unit determines a display aspect for a display relating to each explanatory variable or presence or absence of the display in the cause-and-effect diagram, based on the degree of influence of the explanatory variable.

2. The analysis apparatus according to claim 1, wherein

a relationship between the objective variable and a plurality of the explanatory variables is represented by one or more linear models, and the degree of influence of the explanatory variable indicated by the relationship information is represented by a coefficient by which the explanatory variable is multiplied in the linear model.

3. The analysis apparatus according to claim 1 or 2, wherein

the relationship information indicates, for each of the explanatory variables, a plurality of degrees of influence of the explanatory variable, and the generation unit computes, for each of the explanatory variables, a statistical value of the plurality of degrees of influence indicated by the relationship information for the explanatory variable, and generates the determination-and-effect diagram by handling the computed statistical value as the degree of influence of the explanatory variable.

4. The analysis apparatus according to claims 1 to 3, wherein

the generation unit makes a display aspect different between a display relating to an explanatory variable having the degree of influence equal to or more than a threshold value and a display relating to an explanatory variable other than the explanatory variable having the degree of influence equal to or more than the threshold value, makes a display aspect different between a display relating to an explanatory variable having the degree of influence within a predetermined rank in order and a display relating to an explanatory variable other than the explanatory variable having the degree of influence within the predetermined rank in order, or, for each group of the explanatory variables, makes a display aspect different between a display relating to an explanatory variable having the degree of influence within a predetermined rank in order among explanatory variables belonging to the group and a display relating to an explanatory variable other than the explanatory variable having the degree of influence within the predetermined rank in order among the explanatory variables belonging to the group.

5. The analysis apparatus according to claims 1 to 3, wherein

the generation unit allows the cause-and-effect diagram to include only a display relating to an explanatory variable having the degree of influence equal to or more than a threshold value, allows the cause-and-effect diagram to include only a display relating to an explanatory variable having the degree of influence within a predetermined rank in order, or, for each group of the explanatory variables, allows the cause-and-effect diagram to include only a display relating to an explanatory variable having the degree of influence within a predetermined rank in order among explanatory variables belonging to the group.

6. The analysis apparatus according to any one of claims 1 to 5, wherein

the generation unit outputs the cause-and-effect diagram, acquires, when the explanatory variable is specified in the output cause-and-effect diagram, data indicating a plurality of values of the specified explanatory variable, and generates a graph by using the data.

7. The analysis apparatus according to claim 6, wherein

the generation unit acquires time-series data on the specified explanatory variable, and generates, as the graph, a first graph representing a temporal change of a value of the explanatory variable or a second graph representing a result of statistically processing the time-series data.

8. The analysis apparatus according to claim 7, wherein the generation unit generates screen data including both the first graph and the second graph.

9. The analysis apparatus according to any one of claims 6 to 8, wherein the generation unit allows the graph to include data on the objective variable.

10. A control method executed by a computer, comprising:

an acquisition step of acquiring relationship information indicating a degree of influence of each of a plurality of explanatory variables on an objective variable; and

a generation step of generating, by using the relationship information, a cause-and-effect diagram representing a relationship between the objective variable and the explanatory variables, wherein,

in the generation step, a display aspect for a display relating to each explanatory variable or presence or absence of the display in the cause-and-effect diagram is determined based on the degree of influence of the explanatory variable.

11. The control method according to claim 10, wherein

a relationship between the objective variable and a plurality of the explanatory variables is represented by one or more linear models, and the degree of influence of the explanatory variable indicated by the relationship information is represented by a coefficient by which the explanatory variable is multiplied in the linear model.

12. The control method according to claim 10 or 11, wherein

the relationship information indicates, for each of the explanatory variables, a plurality of degrees of influence of the explanatory variable, the control method further comprising, in the generation step, computing, for each of the explanatory variables, a statistical value of the plurality of degrees of influence indicated by the relationship information for the explanatory variable, and generating the determination-and-effect diagram by handling the computed statistical value as the degree of influence of the explanatory variable.

13. The control method according to claims 10 to 12, further comprising,

in the generation step, making a display aspect different between a display relating to an explanatory variable having the degree of influence equal to or more than a threshold value and a display relating to an explanatory variable other than the explanatory variable having the degree of influence equal to or more than the threshold value, making a display aspect different between a display relating to an explanatory variable having the degree of influence within a predetermined rank in order and a display relating to an explanatory variable other than the explanatory variable having the degree of influence within the predetermined rank in order, or, for each group of the explanatory variables, making a display aspect different between a display relating to an explanatory variable having the degree of influence within a predetermined rank in order among explanatory variables belonging to the group and a display relating to an explanatory variable other than the explanatory variable having the degree of influence within the predetermined rank in order among the explanatory variables belonging to the group.

14. The control method according to claims 10 to 12, further comprising,

in the generation step, allowing the cause-and-effect diagram to include only a display relating to an explanatory variable having the degree of influence equal to or more than a threshold value, allowing the cause-and-effect diagram to include only a display relating to an explanatory variable having the degree of influence within a predetermined rank in order, or, for each group of the explanatory variables, allowing the cause-and-effect diagram to include only a display relating to an explanatory variable having the degree of influence within a predetermined rank in order among explanatory variables belonging to the group.

15. The control method according to any one of claims 10 to 14, further comprising:

in the generation step, outputting the cause-and-effect diagram; acquiring, when the explanatory variable is specified in the output cause-and-effect diagram, data indicating a plurality of values of the specified explanatory variable; and generating a graph by using the data.

16. The control method according to claim 15, further comprising:

in the generation step, acquiring time-series data on the specified explanatory variable; and generating, as the graph, a first graph representing a temporal change of a value of the explanatory variable or a second graph representing a result of statistically processing the time-series data.

17. The control method according to claim 16, further comprising, in the generation step, generating screen data including both the first graph and the second graph.

18. The control method according to any one of claims 15 to 17, further comprising,
in the generation step, allowing the graph to include data on the objective variable.

**19.** A program causing a computer to execute the control method according to any one of claims 10 to 18.

# FIG. 1

```
                                                    50

┌──────────────┬──────────────┐
│ EXPLANATORY  │ DEGREE OF    │
│ VARIABLE     │ INFLUENCE    │
├──────────────┼──────────────┤
│              │              │
└──────────────┴──────────────┘
```

2000

┌─────────────────────────────────────────────────────────────┐
│ ANALYSIS APPARATUS                                            │
│                                                               │
│   ┌───────────────────────────────────────────────────────┐  │
│   │ ACQUIRE RELATIONSHIP INFORMATION 50 INDICATING        │  │
│   │ DEGREE OF INFLUENCE OF EXPLANATORY VARIABLE           │  │
│   │ ON OBJECTIVE VARIABLE                                  │  │
│   └───────────────────────────────────────────────────────┘  │
│                                                               │
│   ┌───────────────────────────────────────────────────────┐  │
│   │ GENERATE, BY USING RELATIONSHIP INFORMATION 50,      │  │
│   │ CAUSE-AND-EFFECT DIAGRAM 10 REPRESENTING             │  │
│   │ RELATIONSHIP BETWEEN OBJECTIVE VARIABLE AND          │  │
│   │ EXPLANATORY VARIABLE                                  │  │
│   └───────────────────────────────────────────────────────┘  │
└─────────────────────────────────────────────────────────────┘

                                                    10

```
                          14             16
ENVIRONMENT           MATERIAL
        AVERAGE                   COMPONENT 1
        TEMPERATURE                        13
┌──────────┐      ┌───────────┐                      12
│ LOWEST   │      │COMPONENT 2│
│TEMPERATURE│     └───────────┘     COMPONENT 3
└──────────┘        HUMIDITY                      DEFECT
                              ┌───────────┐         11
                              │ QUALITY   │
                              │INFORMATION 3│
        ┌───────────┐         └───────────┘
        │ QUALITY   │
        │INFORMATION 2│
        └───────────┘    QUALITY INFORMATION 1
                 QUALITY
```

DISPLAY ASPECT OR PRESENCE OR ABSENCE OF
FACTOR DISPLAY 16 IS DETERMINED BASED ON
DEGREE OF INFLUENCE

FIG. 2

FIG. 3

COMPUTER

1000

1100

INPUT/
OUTPUT I/F

1020

BUS

1080

PROCESSOR

MEMORY

STORAGE
DEVICE

NETWORK IF

1120

1040

1060

# FIG. 4

50

RELATIONSHIP
INFORMATION

ACQUISITION OF RELATIONSHIP
INFORMATION 50 MEETING
CONDITION

2000

ANALYSIS APPARATUS

SPECIFICATION OF
CONDITION RELATING
TO RELATIONSHIP
INFORMATION 50

SCREEN DATA
INCLUDING
CAUSE-AND-EFFECT
DIAGRAM

60

USER TERMINAL

USER

FIG. 5

```
        ┌─────────┐
        │  Start  │
        └─────────┘
             │
┌────────────────────────────────────────────┐
│  ACQUIRE RELATIONSHIP INFORMATION 50         │ ⌇ S102
└────────────────────────────────────────────┘
             │
┌────────────────────────────────────────────┐
│  GENERATE CAUSE-AND-EFFECT DIAGRAM 10        │ ⌇ S104
│  BY USING RELATIONSHIP INFORMATION 50        │
└────────────────────────────────────────────┘
             │
┌────────────────────────────────────────────┐
│  OUTPUT GENERATED CAUSE-AND-EFFECT DIAGRAM 10│ ⌇ S106
└────────────────────────────────────────────┘
             │
        ┌─────────┐
        │   End   │
        └─────────┘
```

FIG. 6

| OBJECTIVE VARIABLE | PRESENCE OR ABSENCE OF DEFECT | |
|---|---|---|
| EXPLANATORY VARIABLE | IDENTIFICATION INFORMATION | DEGREE OF INFLUENCE |
| | COMPONENT 1 | 3. 54 |
| | COMPONENT 2 | -1. 3 |
| | COMPONENT 3 | 0. 03 |
| | . . . | . . . |

FIG. 7

| OBJECTIVE VARIABLE | PRESENCE OR ABSENCE OF DEFECT | |
|---|---|---|
| | IDENTIFICATION INFORMATION | DEGREE OF INFLUENCE |
| EXPLANATORY VARIABLE FOR LINEAR MODEL 1 | COMPONENT 1 | 3. 54 |
| | COMPONENT 2 | −1. 3 |
| | COMPONENT 3 | 0. 03 |
| | . . . | . . . |
| | IDENTIFICATION INFORMATION | DEGREE OF INFLUENCE |
| EXPLANATORY VARIABLE FOR LINEAR MODEL 2 | COMPONENT 1 | 2. 75 |
| | COMPONENT 2 | 1. 2 |
| | COMPONENT 3 | −0. 4 |
| | . . . | . . . |
| . . . | . . . | |

FIG. 8

FIG. 9

10

ENVIRONMENT          MATERIAL

LOWEST
TEMPERATURE          COMPONENT 2

DEFECT

QUALITY
INFORMATION 3

QUALITY
INFORMATION 2

QUALITY

# FIG. 10

10

ENVIRONMENT

AVERAGE TEMPERATURE

LOWEST TEMPERATURE

HUMIDITY

MATERIAL

COMPONENT 1

COMPONENT 2

COMPONENT 3

DEFECT

QUALITY INFORMATION 3

QUALITY INFORMATION 2

QUALITY INFORMATION 1

QUALITY

GENERATE GRAPH 30 FOR SPECIFIED EXPLANATORY VARIABLE

CONTENT BY PERCENTAGE OF COMPONENT 2

30

CONTENT BY PERCENTAGE (%)

TIME

FIG. 11

```
                         ┌─────────┐
                         │  Start  │
                         └─────────┘
                              │
    ┌─────────────────────────────────────────────────────┐
    │  ACQUIRE IDENTIFICATION INFORMATION OF SPECIFIED     │  S202
    │              EXPLANATORY VARIABLE                    │
    └─────────────────────────────────────────────────────┘
                              │
    ┌─────────────────────────────────────────────────────┐
    │  ACQUIRE PLURALITY OF PIECES OF DATA INDICATED BY    │  S204
    │  SOURCE DATA FOR SPECIFIED EXPLANATORY VARIABLE      │
    └─────────────────────────────────────────────────────┘
                              │
    ┌─────────────────────────────────────────────────────┐
    │               GENERATE GRAPH 30                      │  206
    └─────────────────────────────────────────────────────┘
                              │
    ┌─────────────────────────────────────────────────────┐
    │                OUTPUT GRAPH 30                       │  S208
    └─────────────────────────────────────────────────────┘
                              │
                         ┌─────────┐
                         │   End   │
                         └─────────┘
```

# FIG. 12

FIG. 13

# FIG. 14

EP 4 050 536 A1

## INTERNATIONAL SEARCH REPORT

| International application No. |
| --- |
| PCT/JP2020/039819 |

**A. CLASSIFICATION OF SUBJECT MATTER**

G06Q 10/06(2012.01)i; G06Q 50/04(2012.01)i; G06F 16/904(2019.01)i
FI: G06F16/904; G06Q50/04; G06Q10/06 326

According to International Patent Classification (IPC) or to both national classification and IPC

**B. FIELDS SEARCHED**

Minimum documentation searched (classification system followed by classification symbols)
G06Q10/06; G06Q50/04; G06F16/904

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 11-250135 A (HITACHI, LTD.) 17 September 1999 (1999-09-17) paragraphs [0020]-[0044], fig. 4, 5, 7 | 1, 4-5, 10, 13-14, 19 |
| Y | | 2, 6-9, 11, 15-18 |
| A | | 3, 12 |
| Y | JP 2011-150496 A (HITACHI, LTD.) 04 August 2011 (2011-08-04) paragraph [0024] | 2, 11 |
| Y | JP 2019-36061 A (TOSHIBA CORP.) 07 March 2019 (2019-03-07) paragraphs [0060]-[0064], [0071] | 6-9, 15-18 |
| A | WO 2017/168458 A1 (NEC CORP.) 05 October 2017 (2017-10-05) paragraphs [0019]-[0021], [0029]-[0032], fig. 2, 3 | 3, 12 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 November 2020 (06.11.2020) | 15 December 2020 (15.12.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

Information on patent family members

International application No.

PCT/JP2020/039819

| Patent Documents referred in the Report | Publication Date | Patent Family | Publication Date |
|---|---|---|---|
| JP 11-250135 A | 17 Sep. 1999 | (Family: none) | |
| JP 2011-150496 A | 04 Aug. 201 | (Family: none) | |
| JP 2019-36061 A | 07 Mar. 2019 | US 2019/0050460 A1 paragraphs [0072]-[0076], [0083], fig. 10, 12 | |
| WO 2017/168458 A1 | 15 Oct. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019036061 A
- US 20140222741 A1

- JP 2019193810 A